**Europäisches Patentamt**

**European Patent Office**

**Office européen des brevets**

(19)

(11) Numéro de publication: **0 069 963**
**B1**

(12) # FASCICULE DE BREVET EUROPEEN

(45) Date de publication du fascicule du brevet:
**05.12.84**

(51) Int. Cl.³: **C 03 C 3/30**

(21) Numéro de dépôt: **82105998.7**

(22) Date de dépôt: **06.07.82**

(54) **Matériau vitreux et application à un composant à semiconducteur.**

(30) Priorité: **09.07.81 FR 8113497**

(43) Date de publication de la demande:
**19.01.83 Bulletin 83/3**

(45) Mention de la délivrance du brevet:
**05.12.84 Bulletin 84/49**

(84) Etats contractants désignés:
**BE DE FR GB IT NL**

(56) Documents cités:
**FR - A - 1 258 070**
**FR - A - 1 370 296**
**FR - A - 2 028 127**

(73) Titulaire: **COMPAGNIE GENERALE D'ELECTRICITE**
**Société anonyme dite:, 54, rue La Boétie, F-75382 Paris**
**Cedex 08 (FR)**

(72) Inventeur: **Parant, Jean-Paul, Résidence "La Prairie"**
**Bâtiment C6, F-91290 Arpajon (FR)**

(74) Mandataire: **Weinmiller, Jürgen et al, Zeppelinstrasse 63,**
**D-8000 München 80 (DE)**

## Description

La présente invention concerne un matériau vitreux et l'application de ce matériau à un composant à semi-conducteur.

On connaît un matériau à base de verre décrit dans la demande de brevet français Nº 2028127 publiée le 9 octobre 1970. Ce matériau, qui peut être appliqué au scellement de deux pièces de verres destinées à l'industrie électronique, comporte un mélange d'un verre de scellement avec du titanate d'aluminium, le verre de scellement pouvant être composé par exemple d'oxyde de zinc, d'oxyde de plomb, d'oxyde de bore et de silice.

Cependant, les compostions de scellement décrites dans cette demande de brevet cristallisent à basse température et ne peuvent donc être utilisées dans certaines applications.

La présente invention a pour but de réaliser un matériau vitreux transparent, présentant simultanément une bonne résistance à la dévitrification, un faible coefficient de dilatation thermique et une température de nappage relativement faible, afin d'être capable d'être appliqué au revêtement de pièces de silicium employées dans la fabrication de composants à semi-conducteur.

La présente invention a pour objet un matériau vitreux comportant de l'oxyde de zinc ZnO, de l'oxyde de plomb PbO, de l'oxyde de bore $B_2O_3$, de la silice $SiO_2$, du titanate d'aluminium $Al_2TiO_5$ et éventuellement de l'oxyde de bismuth $Bi_2O_3$, caractérisé en ce qu'il comporte en poids

     30 à 40% de ZnO
     15 à 30% de PbO
     20 à 40% de $B_2O_3$
     5 à 20% de $SiO_2$
     2 à 10% de $Al_2TiO_5$
et     0 à 5% de $Bi_2O_3$

La présente invention a aussi pour objet un composant à semi-conducteur comportant une pièce de silicium, caractérisé en ce qu'il comporte en outre une couche d'un matériau vitreux adhérant à la surface extérieure de la pièce, le matériau vitreux comportant en poids

     30 à 40% de ZnO
     15 à 30% de PbO
     20 à 40% de $B_2O_3$
     5 à 20% de $SiO_2$
     2 à 10% de $Al_2TiO_5$
et     0 à 5% de $Bi_2O_3$

Des formes particulières d'exécution de l'objet de la présente invention sont décrites ci-dessous, à titre d'exemple.

Le matériau vitreux selon l'invention est un mélange de six oxydes: l'oxyde de zinc ZnO, l'oxyde de plomb PbO, l'oxyde de bore $B_2O_3$, la silice $SiO_2$, le titanate d'aluminium $Al_2TiO_5$ et l'oxyde de bismuth $Bi_2O_3$. La proportion pondérale de chaque oxyde dans le mélange peut varier d'une valeur minimale à une valeur maximale, ces valeurs étant données dans le tableau 1. →

Ces oxydes sont mélangés sous forme de poudre dans un creuset en platine qui est chauffé pendant 3 h environ pour obtenir la fusion du mélange, à

→          *Tableau 1*

| Oxydes | % en poids | |
|---|---|---|
| | mini | maxi |
| ZnO | 30 | 40 |
| PbO | 15 | 30 |
| $B_2O_3$ | 20 | 40 |
| $SiO_2$ | 5 | 20 |
| $Al_2TiO_5$ | 2 | 10 |
| $Bi_2O_3$ | 0 | 5 |

une température de 1100° C. Le mélange est agité mécaniquement pendant la fusion de façon à accélérer l'élimination des bulles et la liquéfaction des parties non fondues. Le bain homogène liquide ainsi obtenu est coulé dans un moule en graphite. Le matériau solidifié est ensuite soumis à un recuit, puis des échantillons peuvent être taillés en vue de déterminer les propriétés du matériau vitreux ainsi obtenu.

Celui-ci présente une bonne résistance à la dévitrification, un coefficient de dilatation linéaire de l'ordre de $5 \cdot 10^{-6}/°C$, et une température de nappage inférieure ou égale à 650° C. On rappelle que la température de nappage est la température à laquelle un échantillon de verre posé sur un substrat commence à s'étaler sur le substrat.

Il est possible d'utiliser ce matériau vitreux pour déposer un revêtement protecteur sur la surface extérieure d'une pièce de silicium destinée à la fabrication d'un composant à semi-conducteur tel qu'une cellule solaire photoélectrique. Par fusion d'un échantillon du matériau vitreux posé sur la pièce, on forme une couche transparente adhérant à la surface extérieure de la pièce.

Grâce à la faible température de nappage du matériau, le dépôt de cette couche ne risque pas de détériorer les jonctions p-n de la pièce de silicium. D'autre part, le faible coefficient de dilatation du matériau vitreux selon l'invention permet de diminuer les contraintes mécaniques entre le substrat de silicium et le verre déposé. On évite ainsi les fissurations de la couche constatées lorsqu'on utilise un verre selon l'art antérieur.

La couche de verre est stable vis-à-vis du rayonnement ultraviolet, ce qui est un avantage important pour une cellule solaire, par rapport à certains revêtements à base de composés organiques.

La couche déposée constitue également une bonne protection du silicium contre la contamination atmosphérique et les chocs mécaniques.

A titre indicatif, on a réalisé des échantillons d'un verre présentant la composition suivante: →

Les mesures effectuées sur ces échantillons ont permis d'obtenir les résultats suivants:
— coefficient de dilatation moyen entre 20 et 300° C: $5,2 \cdot 10^{-6}/°C$,
— température de nappage 650° C,
— température de transformation 510° C,
— résistance à la dévitrification: bonne; le verre reste transparent après quatre cycles thermiques successifs comprenant chacun une montée à

0 069 963

→ *Tableau 2*

| Oxydes | % en poids |
|---|---|
| ZnO | 35 |
| PbO | 25 |
| B$_2$O$_3$ | 25 |
| SiO$_2$ | 10 |
| Al$_2$TiO$_5$ | 5 |

650°C, un palier à 650°C pendant ¼ h et une descente jusqu'à la température ambiante,
— résistance au rayonnement ultraviolet et à l'humidité: bonne,
— transmission optique dans la gamme de rayonnement visible: très bonne.

## Revendications

1. Matériau vitreux comportant de l'oxyde de zinc ZnO, de l'oxyde de plomb PbO, de l'oxyde de bore B$_2$O$_3$, de la silice SiO$_2$, du titanate d'aluminium Al$_2$TiO$_5$ et éventuellement de l'oxyde de bismuth Bi$_2$O$_3$, caractérisé en ce qu'il comporte en poids
    30 à 40% de ZnO
    15 à 30% de PbO
    20 à 40% de B$_2$O$_3$
    5 à 20% de SiO$_2$
    2 à 10% de Al$_2$TiO$_5$
et    0 à  5 de Bi$_2$O$_3$

2. Composant à semi-conducteur comportant une pièce de silicium, caractérisé en ce qu'il comporte en outre une couche d'un matériau vitreux adhérant à la surface extérieure de la pièce, le matériau vitreux comportant en poids
    30 à 40% de ZnO
    15 à 30% de PbO
    20 à 40% de B$_2$O$_3$
    5 à 20% de SiO$_2$
    2 à 10% de Al$_2$TiO$_5$
et    0 à  5 de Bi$_2$O$_3$

## Patentansprüche

1. Glasartiger Werkstoff, der Zinkoxid ZnO, Bleioxid PbO, Boroxid B$_2$O$_3$, Siliciumdioxid SiO$_2$, Aluminiumtitanat Al$_2$TiO$_5$ und eventuell Wismutoxid Bi$_2$O$_3$ enthält, dadurch gekennzeichnet, dass er gewichtsmässig aufweist:
    30 bis 40% ZnO
    15 bis 30% PbO
    20 bis 40% B$_2$O$_3$
    5 bis 20% SiO$_2$
    2 bis 10% Al$_2$TiO$_5$
und    0 bis  5% Bi$_2$O$_3$

2. Halbleiterbauteil, das ein Siliciumstück aufweist, dadurch gekennzeichnet, dass es ausserdem eine Schicht aus einem glasartigen Werkstoff aufweist, die auf der äusseren Oberfläche des Stücks haftet, wobei der glasartige Werkstoff gewichtsmässig aufweist:
    30 bis 40% ZnO
    15 bis 30% PbO
    20 bis 40% B$_2$O$_3$
    5 bis 20% SiO$_2$
    2 bis 10% Al$_2$TiO$_5$
und    0 bis  5% Bi$_2$O$_3$

## Claims

1. A vitreous material comprising zinc oxide ZnO, lead oxide PbO, boron oxide B$_2$O$_3$, silica SiO$_2$, aluminium titanate Al$_2$TiO$_5$ and possibly bismuth oxide Bi$_2$O$_3$, characterized in that it comprises by weight:
    30 to 40% ZnO
    15 to 30% PbO
    20 to 40% B$_2$O$_3$
    5 to 20% SiO$_2$
    2 to 10% Al$_2$TiO$_5$
and    0 to  5% Bi$_2$O$_3$

2. A semiconductor component comprising a silicon part, characterized in that it further comprises a layer of a vitreous material adhering to the outer surface of the part, the vitreous material comprising by weight:
    30 to 40% ZnO
    15 to 30% PbO
    20 to 40% B$_2$O$_3$
    5 to 20% SiO$_2$
    2 to 10% Al$_2$TiO$_5$
and    0 to  5% Bi$_2$O$_3$